# EUROPÄISCHE PATENTANMELDUNG

(11) **EP 3 361 366 A1**
(43) Veröffentlichungstag der Anmeldung: **15.08.2018**
(21) Anmeldenummer: 17156058.4
(22) Anmeldetag: 14.02.2017
(51) Int. Cl.: G06F 3/0481, G06F 3/0482, G06F 3/0484

(54) **VERFAHREN UND GERÄT ZUR AUTOMATISCHEN UMSCHALTUNG VON CHECKBOXEN**

(71) Anmelder: Siemens Aktiengesellschaft, 80333 München (DE)
(72) Erfinder: DONG, Yi, 90482 Nürnberg (DE); MUNOZ IBARRA, Pablo, 91058 Erlangen (DE)

(57) **Zusammenfassung**

Die Erfindung betrifft ein Verfahren und ein mikroprozessorgesteuertes Gerät zur automatischen Umschaltung von remanenten Checkboxen in einer Anordnung mit Checkboxen in zumindest zwei Hierarchieebenen, wobei bei einer Markierung einer übergeordneten Checkbox die zugehörigen untergeordneten Checkboxen zumindest der nächsten Hierarchieebene automatisch markiert werden, und wobei bei einer De-Markierung der übergeordneten Checkbox die zugehörigen untergeordneten Checkboxen zumindest der nächsten Hierarchieebene automatisch de-markiert werden, und wobei vorgesehen ist, das in Fällen, in denen nicht alle untergeordneten Checkboxen markiert oder demarkiert sind, die zugehörige übergeordnete Checkbox als teilmarkiert gekennzeichnet wird. Dabei wird durch Betätigung der übergeordneten Checkbox ein remanenter Betriebszustand aktiviert bzw. de-aktiviert, wobei im aktivierten remanenten Betriebszustand die Markierungszustände der zu dieser übergeordneten Checkbox zugehörigen untergeordneten Checkboxen jeweils in einem Wiederherstellungsspeicher gespeichert werden, wobei nach einer De-Aktivierung des remanenten Betriebszustandes der Wiederherstellungsspeicher nicht verändert wird, und wobei bei einer erneuten Aktivierung des remanenten Betriebszustandes die Markierungszustände der zu der übergeordneten Checkbox zugehörigen untergeordneten Checkboxen anhand der im Wiederherstellungsspeicher gespeicherten Markierungszustände wiederhergestellt werden. Dieses Konzept zur Verwaltung von Markierungszuständen ermöglicht es einem Benutzer, komplexe Zustände von Markierungen in komplexen untergeordneten Hierarchieebenen fehlerfrei wiederherzustellen.

## Beschreibung

Die Erfindung betrifft ein Verfahren zur automatischen Umschaltung von Checkboxen gemäß dem Oberbegriff des Patentanspruchs 1, und ein mikroprozessgesteuertes Gerät zur Durchführung des Verfahrens gemäß dem Oberbegriff des Patentanspruchs 4.

Grafische Benutzeroberflächen (GUI) von mikroprozessorgesteuerten Geräten werden häufig mit Elementen bedient, die unter dem Namen "Checkbox" geläufig sind.

Bei "Checkboxen" handelt es sich um eine Ansammlung von üblicherweise horizontal oder vertikal angeordneten Auswahlmöglichkeiten, denen jeweils ein Auswahlfeld, die sog. Checkbox, vorangestellt ist. Im Gegenstand zum ebenfalls geläufigen Bedienelement der "Radiobuttons" können bei Checkboxen zur selben Zeit beliebig viele Auswahlmöglichkeiten markiert (ausgewählt) oder de-markiert (nicht ausgewählt) sein.

Eine weitere Besonderheit der "Checkboxen" ist die Tatsache, dass diese mehrere Hierarchieebenen aufweisen können. Dies bedeutet, dass ein Auswahlelement bzw. Eintrag einer Liste oder einer Ansammlung von Checkboxen mehrere Unter-Elemente aufweisen kann, die ebenfalls wiederum Checkboxen sind. Oft werden diese untergeordneten Hierarchie-Elemente nur dann dargestellt, wenn die übergeordnete Checkbox entsprechend erweitert oder "aufgeklappt" wird. Die Möglichkeit, eine übergeordnete Checkbox, die untergeordnete Checkboxen aufweist, zu erweitern oder aufzuklappen, wird häufig durch ein entsprechendes Auswahlelement in Form eines nach unten weisenden Dreieckes oder eines "+"-Zeichens dargestellt.

Durch das Markieren bzw. De-Markieren einer übergeordneten Checkbox können automatisch alle untergeordneten Checkboxen zumindest der nächsten Hierarchieebene oder aller untergeordneter Hierarchieebenen derselben übergeordneten Checkbox gleichzeitig und automatisch ebenfalls markiert oder de-markiert werden. Es können jedoch auch manuell nur ausgewählte untergeordnete Checkboxen markiert bzw. de-markiert werden, so dass ein gemischter, heterogener Zustand entsteht. In solchen Fällen ist es üblich, dass die übergeordnete Checkbox weder als markiert noch als de-markiert dargestellt wird, sondern einen dritten Zustand "teilmarkiert" annimmt. Damit wird einem Benutzer signalisiert, dass nicht alle untergeordneten Checkboxen den selben Markierungszustand aufweisen.

Die Funktionsweise der aus dem Stand der Technik bekannten Checkboxen sind beispielsweise in einem Artikel "Checkbox" der Online-Enzyklopädie Wikipedia (https://de.wikipedia.org/wiki/checkbox) zu entnehmen.

Während also Checkboxen der untersten Hierarchieebene jeweils zwei Zustände (markiert, de-markiert/unmarkiert) aufweisen können, kann eine übergeordnete Checkbox drei verschiedene Stati annehmen, nämlich markiert, de-markiert (unmarkiert) oder teilmarkiert ("Mix"). Ein Problem entsteht, wenn eine zuvor als teilmarkiert gekennzeichnete übergeordnete Checkbox bedient wird. Wird diese Checkbox damit de-markiert, werden alle Markierungen der Checkboxen zumindest in der nächsten Hierarchieebene oder in allen unterliegenden Hierarchieebenen ebenfalls de-markiert; entsprechend wird bei einer Markierung (Auswahl) einer übergeordneten Checkbox der Status aller Checkboxen der zugehörigen untergeordneten Hierarchieebene bzw. aller Hierarchieebenen, die untergeordnet sind, ebenfalls entsprechend umgeschaltet. Es ist aber nicht mehr möglich, den vorherigen Zustand, also den teilmarkierten Zustand, wiederherzustellen, ohne manuell alle untergeordneten Checkboxen entsprechend dem vorherigen Zustand zu markieren. Insbesondere bei der Verwendung umfangreicher Strukturen mit mehreren Hierarchieebenen und vielen untergeordneten Checkboxen können also durch ein versehentliches Umschalten der übergeordneten Checkbox wichtige Parametrierungen oder dergleichen, die in der gezielten Auswahl untergeordneter Checkboxen gegeben sind, verloren gehen bzw. nur unter hohem manuellen Einsatz wiederhergestellt werden.

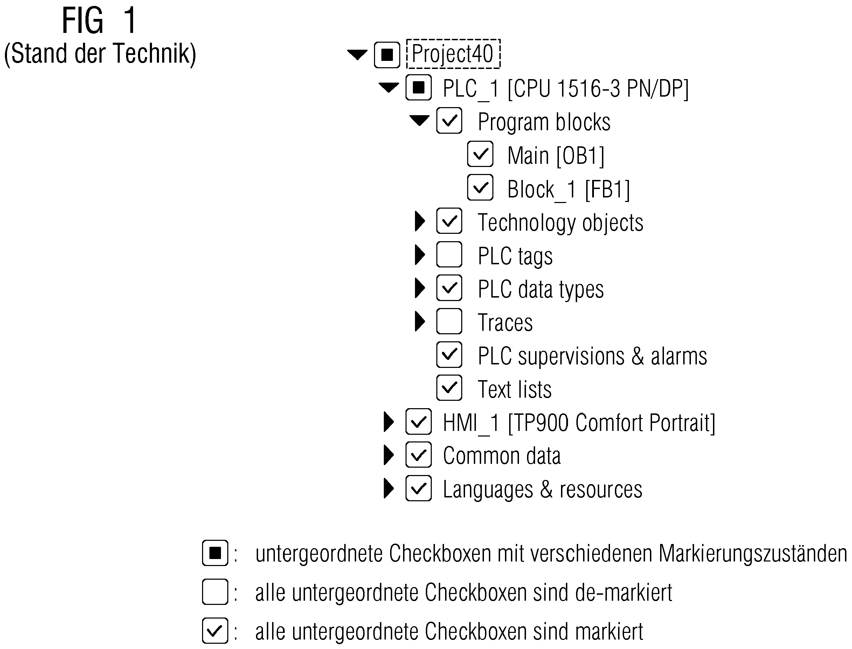

In der Figur 1, die dem Stand der Technik entspricht, sind Checkboxen in verschiedenen Hierarchieebenen dargestellt. Die übergeordnete Hierarchieebene mit der Bezeichnung "Project 40" ist ebenso teilmarkiert wie die im Folgenden betrachtete Checkbox der nächsten Hierarchieebene mit der Bezeichnung "PLC_1". Das liegt daran, dass in der nächsten Hierarchieebene zwar die meisten Checkboxen markiert sind, aber die Checkboxen mit den Bezeichnungen "PLC tags" und "Traces" nicht markiert bzw. nicht ausgewählt sind.

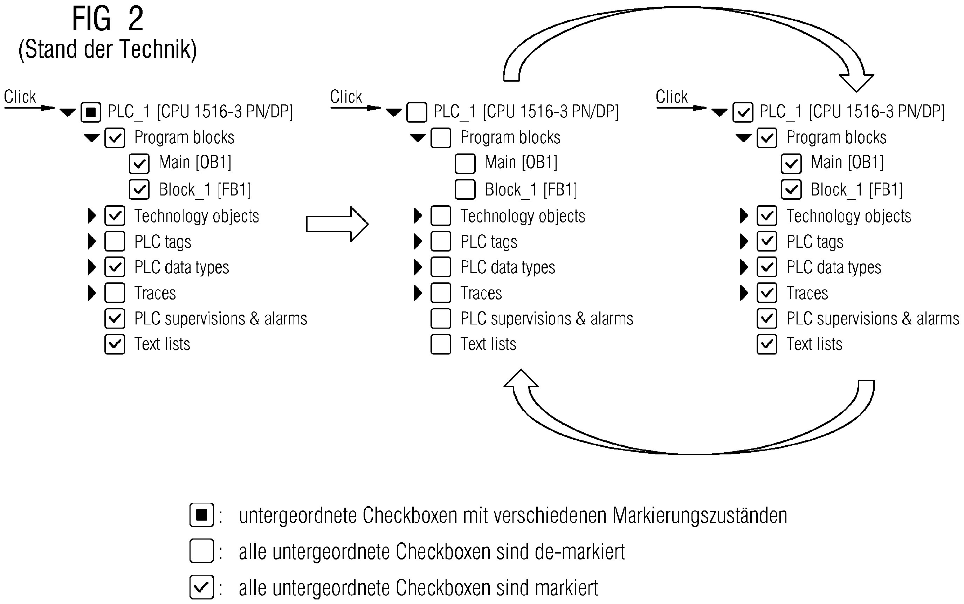

In der Figur 2, die ebenfalls den Stand der Technik zeigt, wird dargestellt, wie sich ein Bedienen ("Klicken") der Checkbox "PlC_1" auswirkt. In einem ersten Bedienschritt werden damit alle untergeordneten Checkboxen de-markiert, also in einen nicht-ausgewählten Zustand versetzt. Ein weiteres Klicken auf dieselbe Checkbox "PLC 1" führt dazu, dass alle untergeordneten Checkboxen ebenfalls markiert (ausgewählt) werden, auch die ursprünglich nicht ausgewählten Checkboxen "PLC tags" und "Traces". Eine Wiederherstellung des in der linken Spalte dargestellten Ursprungzustands ist ohne Weiteres nicht mehr möglich.

Manche Softwareprogramme bieten die Möglichkeit, den zuletzt eingegebenen Befehl oder eine Reihe von zuletzt eingegebenen Befehlen rückgängig zu machen; dies funktioniert oft jedoch nicht mit Checkboxen. Zudem werden damit auch andere zwischenzeitlich ausgeführte Aktionen rückgängig gemacht.

Es ist also eine Aufgabe der vorliegenden Erfindung, die geschilderten Probleme bei der Bedienung hierarchisch strukturierter Checkboxen zu lösen.

Es ist eine Kernidee der erfindungsgemäßen Lösung der oben geschilderten Aufgabe, vor einem gesammelten Markieren bzw. De-Markieren von untergeordneten Checkboxen mit Hilfe einer Bedienung einer zugehörigen übergeordneten Checkbox das Belegungsmuster dieser untergeordneten Checkboxen zu speichern und es einem Benutzer zu ermöglichen, dieses Muster durch wiederholtes Bedienen einer übergeordneten Checkbox wiederherzustellen und damit den teilmarkierten Zustand der übergeordneten Checkbox wiederherzustellen.

Die Aufgabe wird insbesondere durch das Verfahren gemäß dem Patentanspruch 1 und durch das mikroprozessorgesteuerte Gerät nach Patentanspruch 4 gelöst.

Dabei ist ein Verfahren zur automatischen Umschaltung von remanenten Checkboxen in einer Anordnung mit Checkboxen in zumindest zwei Hierarchieebenen vorgesehen, wobei bei einer Markierung einer übergeordneten Checkbox die zugehörigen untergeordneten Checkboxen zumindest der nächsten Hierarchieebene automatisch markiert werden, und wobei bei einer De-Markierung der übergeordneten Checkbox die zugehörigen untergeordneten Checkboxen zumindest der nächsten Hierarchieebene automatisch de-markiert werden, und wobei vorgesehen ist, das in Fällen, in denen nicht alle untergeordneten Checkboxen markiert oder de-markiert sind, die zugehörige übergeordnete Checkbox als teilmarkiert gekennzeichnet wird. Dabei wird durch Betätigung der übergeordneten Checkbox ein remanenter Betriebszustand aktiviert bzw. de-aktiviert, wobei im aktivierten remanenten Betriebszustand die Markierungszustände der zu dieser übergeordneten Checkbox zugehörigen untergeordneten Checkboxen jeweils in einem Wiederherstellungsspeicher gespeichert werden, wobei nach einer De-Aktivierung des remanenten Betriebszustandes der Wiederherstellungsspeicher nicht verändert wird, und wobei bei einer erneuten Aktivierung des remanenten Betriebszustandes die Markierungszustände der zu der übergeordneten Checkbox zugehörigen untergeordneten Checkboxen anhand der im Wiederherstellungsspeicher gespeicherten Markierungszustände wiederhergestellt werden. Dieses Konzept zur Verwaltung von Markierungszuständen ermöglicht es einem Benutzer, komplexe Zustände von Markierungen in komplexen untergeordneten Hierarchieebenen fehlerfrei wiederherzustellen, auch wenn zuvor temporär alle Checkboxen, keine der Checkboxen oder einen Mixed eingestellt worden sind.

Die Aufgabe wird ferner durch ein mikroprozessorgesteuertes Gerät mit einer grafischen Benutzeroberfläche gelöst, das zur Ausführung des Verfahrens eingerichtet ist. Dabei wird ein Mikroprozessorgesteuertes Gerät mit einer grafischen Benutzeroberfläche vorgeschlagen, wobei die grafische Benutzeroberfläche Checkboxen in zumindest zwei Hierarchieebenen aufweist, wobei das mikroprozessorgesteuerte Gerät zu einer automatischen Vorbelegung der Checkboxen eingerichtet ist, indem bei einer Markierung einer übergeordneten Checkbox die zugehörigen untergeordneten Checkboxen zumindest der nächsten Hierarchieebene automatisch markiert werden, und indem bei einer De-Markierung der übergeordneten Checkbox die zugehörigen untergeordneten Checkboxen zumindest der nächsten Hierarchieebene automatisch de-markiert werden, und wobei vorgesehen ist, das in Fällen, in denen nicht alle untergeordneten Checkboxen markiert oder de-markiert sind, die zugehörige übergeordnete Checkbox als teilmarkiert gekennzeichnet wird. Dabei ist das Mikroprozessorgesteuerte Gerät derart ausgestaltet, dass durch Betätigung der übergeordneten Checkbox ein remanenter Betriebszustand aktiviert bzw. de-aktiviert wird, wobei im aktivierten remanenten Betriebszustand die Markierungszustände der zu dieser übergeordneten Checkbox zugehörigen untergeordneten Checkboxen jeweils in einem Wiederherstellungsspeicher gespeichert werden, wobei nach einer De-Aktivierung des remanenten Betriebszustandes der Wiederherstellungsspeicher nicht verändert wird, und wobei bei einer erneuten Aktivierung des remanenten Betriebszustandes die Markierungszustände der zu der übergeordneten Checkbox zugehörigen untergeordneten Checkboxen anhand der im Wiederherstellungsspeicher gespeicherten Markierungszustände wiederhergestellt werden. Es werden also die ursprünglichen Markierungszustände vollständig wiederhergestellt, so dass zumindest in dem Falle, in dem nach der Wiederherstellung nicht alle untergeordneten Checkboxen markiert oder nicht-markiert sind, die übergeordnete Checkbox in den teilmarkierten Zustand zurückversetzt wird, und anderenfalls entsprechend in einen vollmarkierten oder nicht-markierten Zustand. Daraus folgt auch, dass der ursprüngliche Zustand der übergeordneten Checkbox nicht zwingend gespeichert werden muss, sondern sich anhand der Zustände der untergeordneten Checkboxen rekonstruieren lässt. Durch ein solches mikroprozessorgesteuertes Gerät können die bereits im Zusammenhang mit dem Verfahren geschilderten Vorteile realisiert werden.

Vorteilhafte Ausgestaltungen der Erfindung sind in den abhängigen Patentansprüchen angegeben. Die dabei beschriebenen Merkmale und Vorteile können sowohl einzeln, als auch in freier Kombination miteinander realisiert werden.

Vorteilhaft können im remanenten Betriebszustand im Falle von mehr als zwei Hierarchieebenen die Markierungszustände der Checkboxen aller untergeordneten Hierarchieebenen bei der Bedienung einer zugehörigen übergeordneten Checkbox gespeichert bzw. wiederherstellt werden. Dies kann beispielsweise auf dem Wege einer rekursiven Programmierung des entsprechenden Verhaltens von Checkboxen realisiert werden. Das Speichern bzw. das Wiederherstellen des Bedienungszustandes einer Checkbox in einer direkt nachfolgenden Hierarchieebene (Direct Child) kann also einen sogenannten "Propagationseffekt" nutzen, um die Zustände aller abhängigen Checkboxen tieferliegender Hierarchieebenen ebenfalls zu speichern bzw. wiederherzustellen.

Ein weiterer Vorteil besteht darin, dass die Speicherung von Zuständen der Checkboxen unabhängig von einem generellen "undo"-Speicher eines übergeordneten Computerprogramms geschieht. Dadurch ist es möglich, dass zwischen dem Markieren bzw. De-Markieren einer komplexen Struktur und der Wiederherstellung des teilmarkierten Zustands, also der individuellen Belegung aller untergeordneten Checkboxen, beliebige andere Befehle und Aktionen eines Computerprogramms abgerufen oder ausgeführt werden können, ohne dass diese zwischenzeitlich durchgeführten Befehle und Aktionen ebenfalls wieder rückgängig gemacht werden müssen.

In einer weiteren vorteilhaften Ausgestaltung werden im remanenten Betriebszustand die gespeicherten Markierungszustände der kompletten Struktur zeitnah bei jeder Bedienung einer untergeordneten Checkbox aktualisiert. Dies beschleunigt den Bedienfluss des Programms, weil nicht bei einer Markierung bzw. de-Markierung einer zuvor als teilmarkiert gekennzeichneten Checkbox zunächst alle untergeordneten Zustände gespeichert werden müssen, sondern stets ein aktuelles Abbild der Belegungszustände im Speicher vorliegt. Im nicht-remanenten Betriebszustand bleiben hingegen die gespeicherten Zustände unverändert, um bei einem erneuten Wechsel in den remanenten Betriebszustand wiederhergestellt werden zu können.

Vorteilhaft ist bei einem Start einer Benutzeroberfläche der remanente Betriebszustand voreingestellt, insbesondere dann, wenn die Checkboxen in einem voreingestellten ("default") Muster vorbelegt sind, und diese durch temporäre Einstellungen nicht nachhaltig verändert werden sollen bzw. der beim Start eingestellte Zustand später wiederherstellbar sein soll.

Es ist vorteilhaft, wenn ein gespeicherter bzw. wiederherstellbarer Zustand besonders visualisiert wird, beispielsweise durch eine farbige Hinterlegung der übergeordneten Checkbox oder durch ein besonderes Symbol. Dadurch wird ein Benutzer darauf hingewiesen, dass der bestehende Zustand sich aus der ursprünglich gespeicherten Belegung der untergeordneten Checkboxen ergeben hat bzw. später wiederhergestellt werden kann.

In der vorgenannten Ausgestaltung sind abweichend vom Stand der Technik für die übergeordnete Checkbox mehr als drei verschiedene Darstellungen möglich, nämlich markiert, unmarkiert und teilmarkiert wie im Stand der Technik, und zusätzlich diese drei Zustände mit einer Kennzeichnung, dass der jeweilige Zustand im Betriebsmodus der Remanenz (Speicherung) ist bzw. dass sich derzeitige Änderungen direkt auf den gespeicherten Zustand auswirken.

In dieser vorteilhaften Ausgestaltung ist es also möglich, bei einer übergeordneten Checkbox zu visualisieren, ob für die untergeordneten Checkboxen ein wiederherstellbares Belegungsmuster gespeichert ist, beispielsweise indem diese übergeordnete Checkbox mit einer besonderen Hintergrundfarbe oder mit einem besonderen Zeichen versehen wird.

Ausführungsbeispiele des erfindungsgemäßen Verfahrens werden nachfolgend anhand der Zeichnungen erläutert. Dabei zeigen:
- Figur 1: eine hierarchische Struktur von Checkboxen mit gemischten Markierungszuständen gemäß dem Stand der Technik,
- Figur 2: eine Bedienfolge für eine übergeordnete Checkbox gemäß einer Funktionsweise aus dem Stand der Technik,
- Figur 3: eine Bedienfolge für eine übergeordnete Checkbox gemäß dem erfindungsgemäßen Verfahren, wobei die übergeordnete Checkbox durch drei verschiedene Zustände geschaltet werden kann,
- Figur 4: eine detaillierter dargestellte Bedienfolge für eine übergeordnete Checkbox gemäß dem erfindungsgemäßen Verfahren in einer vorteilhaften Ausgestaltung, wobei die übergeordnete Checkbox sechs verschiedene Zustände annehmen kann, und
- Figur 5: ein Beispiel für verschiedene Speicherzustände bei der Bedienung einer komplexen Checkbox-Struktur.

In den Figuren 1 und 2 werden die Visualisierung und das Bedienverhalten einer hierarchischen Checkbox-Struktur gemäß dem Stand der Technik gezeigt, wie es bereits zuvor beschrieben ist. Dabei ist in der Figur 2 ein Ausschnitt der Struktur aus der Figur 1 gezeigt, wobei die Checkbox mit der Beschriftung "PLC_1" mehrfach bedient wird. Dabei ist zu sehen, dass der im linken Teil der Figur gezeigte gemischte Belegungszustand der untergeordneten Checkboxen mit einmaligem Anklicken der übergeordneten Checkbox verloren geht, indem alle untergeordneten Checkboxen de-markiert werden. Ein weiteres Bedienen der übergeordneten Checkbox führt dazu, dass alle untergeordneten Checkboxen ebenfalls markiert (ausgewählt) werden. Der ursprüngliche Zustand, wie er in der linken Darstellung der Figur 2 zu sehen ist, kann nicht mehr auf einfache Weise erreicht werden. Die übergeordnete Checkbox ("Parent Checkbox") mit der Bezeichnung "PLC_1" hat also im Ausgangszustand einen teilmarkierten Zustand ("Mix State"). Dieser Zustand ist durch wiederholtes Klicken nicht mehr auswählbar bzw. erreichbar; bei der Markierung bzw. Darstellung als "teilmarkiert" handelt es sich also um eine reine Anzeigefunktion und nicht um einen ansteuerbaren Zustand.

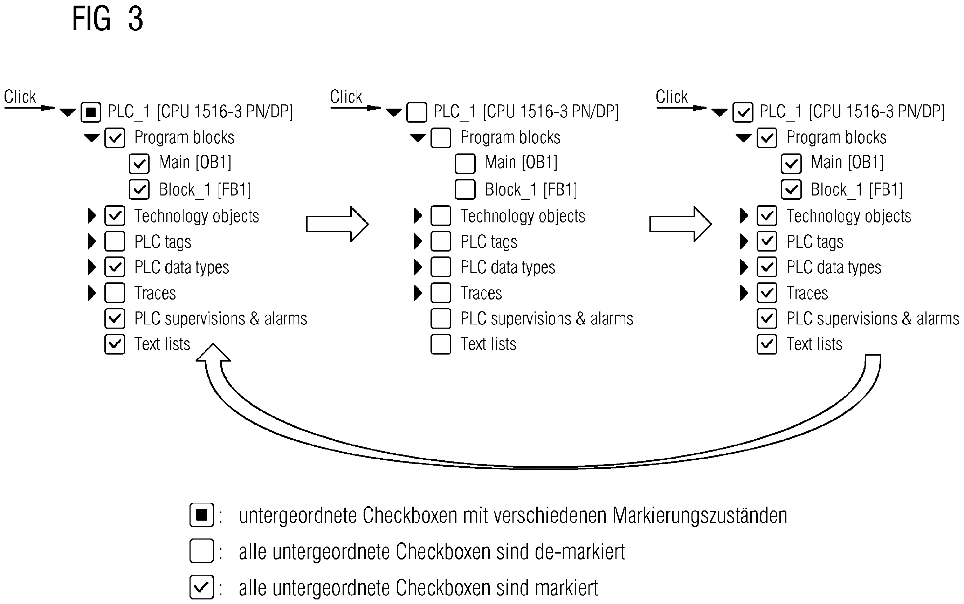

In der Figur 3 ist eine erfindungsgemäße Modifikation des Beispiels aus der Figur 2 in einer einfachen Darstellung dargestellt. Erfindungsgemäß wird im Status "teilmarkiert" der übergeordneten ("Parent") Checkbox der Status aller untergeordneten ("Child") Checkboxen gespeichert, bevor diese durch Bedienung der übergeordneten Checkbox alle pauschal in den Status "de-markiert" (nicht ausgewählt; "unchecked") gemäß der mittleren Darstellung in der Figur 3 bzw. alle in den Status "markiert" (ausgewählt; "checked") gemäß der rechten Darstellung in der Figur 3 versetzt werden. Ein nächster auswählbarer Status, der in der Bedienfolge gemäß der exemplarischen Darstellung der Figur 3 durch ein drittes Klicken auf die übergeordnete Checkbox "PLC_1" erreicht wird, stellt den ursprünglichen teilmarkierten Zustand wieder her, in dem der zu Beginn gespeicherte Zustand angerufen wird. Es wird also ein neuer auswählbarer Zustand "teilmarkiert" in die Bedienfolge eingefügt, der also nicht nur ein sich ergebender Anzeige-Zustand ist, sondern aktiv wieder angesteuert werden kann. Für eine übergeordnete Checkbox wird also neben den auswählbaren Zuständen "markiert" und "de-markiert" ein dritter auswählbarer bzw. ansteuerbarer Zustand vorgesehen, der sich aus einer gespeicherten Konstellation ergibt und auch als "Memory State" oder "Remanenz" oder "Remanenter Zustand" bezeichnet werden kann. In einer Ausführungsform kann sich dieser dann ausgewählte oder auswählbare teilmarkierte Zustand visuell von dem teilmarkierten Zustand gemäß dem Stand der Technik unterscheiden, um einem Benutzer darzustellen, dass der teilmarkierte Zustand in einem Speicherbereich zwischengespeichert ist. Dadurch kann in einer vorteilhaften Ausgestaltung für eine markierte oder de-markierte übergeordnete Checkbox visualisiert werden, ob "dahinter", also im Hintergrund, wiederherstellbare teilmarkierte Zustände bzw. Zustandsmuster vorliegen. Die Reihenfolge der Bedienschritte, also ob beispielsweise auf den individuellen, teilmarkierten Zustand zuerst ein de-markierter Zustand oder ein voll-markierter Zustand folgt, oder umgekehrt, hängt von der jeweiligen programmtechnischen Ausgestaltung ab und kann in einer Ausgestaltung auch in einem Einstellungsmenü oder dergleichen parametriert werden. Vorteilhaft wird dazu eine Konvention vorgegeben, um ein gleichartiges Verhalten verschiedener Benutzeroberflächen sicherzustellen. Besonders vorteilhaft wird automatisch diejenige Bedienfolge gewählt, die für das Betriebssystem der jeweiligen Maschine üblich ist, so dass ein Benutzer sich nicht umgewöhnen muss.

Um einen Markierungszustand untergeordneter Checkboxen wiederherstellen zu können, wird zu jeder übergeordneten Checkbox ("Parent Checkbox") der Markierungszustand seiner direkten Hierarchie-Nachfolger ("Direct Children") in einer Speicherstruktur ("Persistenz") gespeichert. Durch den Propagationseffekt zieht sich eine solche Speicherung in einer rekursiven Weise von den direkten Hierarchienachfolgern zu den weiter nachfolgenden Hierarchienachfolgern immer weiter durch, so dass alle Checkboxen aller Hierarchiestufen persistiert (zustandsgespeichert) sind. Diese "Persistenz" wird immer dann aktualisiert bzw. "upgedated", sofern eine untergeordnete Checkbox ("Direkt Chield") einen Markierungszustandswechsel zwischen "markiert", "de-markiert" und "teilmarkiert" aufweist; letztgenannter Status kann jedoch nur dann auftreten, wenn die betroffene Checkbox gleichzeitig übergeordnete Checkbox für weitere Checkboxen ist. Wenn ein solcher Zustandswechsel dadurch geschieht, dass eine übergeordnete Checkbox umgeschaltet wird, wird die Persistenz jedoch nicht aktualisiert; die untergeordneten Checkboxen werden also zwar gesammelt in den neuen Zustand "markiert" oder "de-markiert" versetzt, der Inhalt der Speicherstruktur ("Persistenz") bleibt jedoch gemäß dem vorherigen gemischten Zustand erhalten. Dies ist wesentlich für den Zustand "Memory State" oder "Remanenz", der es ermöglicht, einen Zustand wiederzuerlangen, der vor einer Bedienaktion "check all" oder "uncheck all" durch entsprechendes Markieren bzw. de-markieren einer übergeordneten Checkbox für alle dieser übergeordneten Checkbox untergeordneten Checkboxen erreicht wird.

Die Wiederherstellung eines teilmarkierten Zustands einer übergeordneten Checkbox und damit der ursprünglichen, gemischten Belegung der untergeordneten Checkboxen wird vorteilhaft durch wiederholtes Anklicken der übergeordneten Checkbox erreicht, wobei diese übergeordnete Checkbox nacheinander die Zustände "de-markiert" - "markiert" - "Memory State" ("teilmarkiert"; "Remanenz") durchläuft; die exakte Reihenfolge dieser drei Zustände ist jedoch beliebig. Nach Auswahl des drittgenannten Zustands kann durch erneutes Anklicken bzw. Anwählen der entsprechenden Checkbox der erstgenannte Zustand wiederhergestellt werden usw. Sobald eine übergeordnete Checkbox den Zustand "teilmarkiert" oder "Memory State", also "wiederhergestellt", annimmt, werden die Informationen der Persistenz und somit die gespeicherten Belegungsmuster der untergeordneten Checkboxen den Checkboxen der nächsten Hierarchieebene zugeordnet, wobei in den Fällen, in denen eine Checkbox der nächstliegenden Hierarchieebene ("Direct Child") damit ebenfalls in den Status "teilmarkiert" bzw. "Memory State" gelangt, dies auch für die dann nachfolgende Hierarchieebene durchgeführt wird, die somit also ebenfalls in den ursprünglichen Belegungszustand versetzt wird. Damit propagiert sich der Wiederherstellungseffekt bis in die unterste Hierarchieebene.

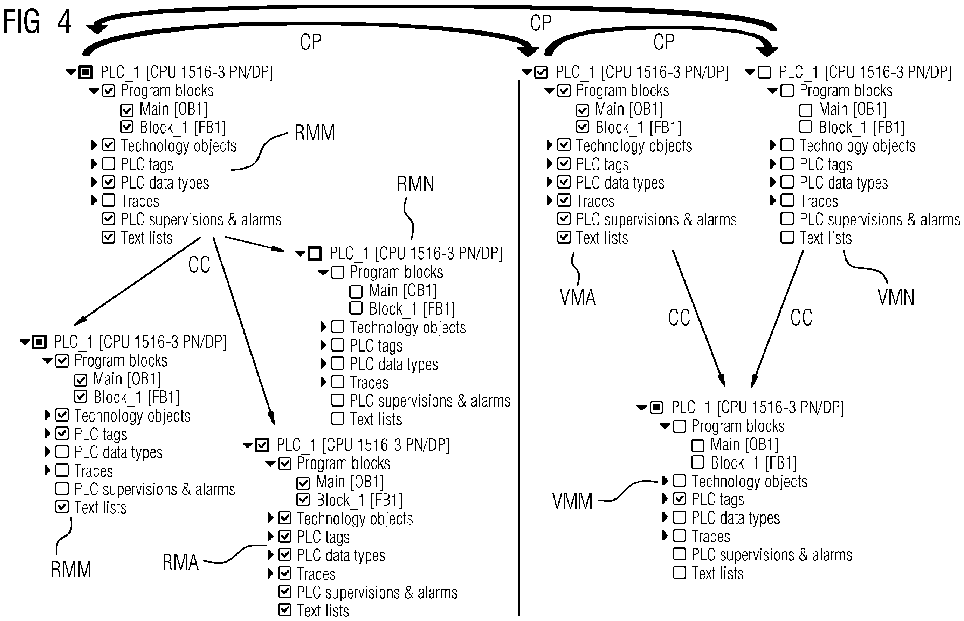

In der Figur 4 ist eine besonders vorteilhafte Variante der Erfindung dargestellt, wobei die bereits als mögliche Ausgestaltung erwähnte Markierung der übergeordneten Checkbox für einen Betriebszustand "Remanenz" in diesem Beispiel durch eine besonders dicke Umrandung gegeben ist; selbstverständlich sind andere Visualisierungen möglich, beispielsweise durch zusätzliche Symbole oder farbige Hinterlegungen der jeweiligen Checkboxen.

Die Figur 4 ist in einen linken und in einen rechten Teil gegliedert. Im linken Teil der Figur ist eine Anordnung mit Checkboxen in einem "Remanenz"-Zustand (auch "Memory State" genannt), während sich die Anordnung im rechten Teil der Figur in einem klassischen, aus dem Stand der Technik bekannten Zustand befindet, der als "Variable"-Modus bezeichnet werden kann. Erfindungsgemäß kann durch das mehrfache Betätigen bzw. "umschalten" einer übergeordneten Checkbox PLC_1 zwischen beiden Modi umgeschaltet werden. Das ist in der Figur 4 durch die dicken Pfeile CP ("Check Parent") visualisiert. Im vorliegenden Beispiel wird nur die übergeordnete ("Parent") Checkbox der obersten Hierarchieebene betrachtet; die Erfindung kann jedoch auch nur auf einen Teil der Struktur angewendet werden, indem beispielsweise die Checkbox "Program blocks" als übergeordnete Checkbox des Teil-Baums, der aus "Main" und "Block_1" gebildet wird, fungiert; dabei bleiben die über- und nebengeordneten Checkboxen unberührt. Im gezeigten Beispiel wird für die graphische Anzeige im "Remanenz"-Modus nur die übergeordnete Checkbox entsprechend visualisiert; in einer nicht gezeigten Variante können auch alle durch Speicherung gesicherten untergeordneten Checkboxen visualisiert werden, was vorliegend jedoch zur besseren Übersicht nicht gezeigt ist.

Vorteilhaft startet das Verfahren im "Remanenz"-Zustand, der auf der linken Seite der Figur 4 gezeigt ist. Das ist besonders vorteilhaft, wenn ein Programm, beispielsweise ein Installations-Programm für Software, bei dem die zu installierenden Komponenten ausgewählt werden sollen, bereits mit einer allgemein gebräuchlichen "Standard"-Auswahl vorbelegt ist. Im Beispiel ist die übergeordnete Checkbox PLC_1 also im Zustand RMM ("Remanent Mix ") und somit als "Remanent" dargestellt (hier durch eine dick gezeichnete Umrandung) und im inneren des Symbols als "teilmarkiert" (durch ein Quadrat) gekennzeichnet, weil die untergeordneten Checkboxen teilweise markiert sind. Sofern im gezeigten "Remanenz"-Zustand eine Bedienung CC ("click child") einer untergeordneten Checkbox erfolgt, werden die dabei betätigten Checkboxen einzeln umgeschaltet. Für die übergeordnete Checkbox PLC_1 kann sich dabei je nach Belegung der untergeordneten Checkboxen weiter ein gemischter Zustand RMM oder ein Zustand RMN ("Remanent No checked"), bei dem keine untergeordnete Checkbox ausgewählt ist, oder ein Zustand RMA ("Remanent All checked") mit einer Auswahl aller Checkboxen ergeben; entsprechend ist das innere des jeweiligen Symbols entweder mit einem "Checked"-Haken oder leer dargestellt. Wesentlich ist, dass im "Remanenz"-Modus alle Änderungen CC an untergeordneten Checkboxen sogleich in den Remanenz-Speicher übernommen werden, der damit aktualisiert bzw. "upgedated" wird.

Mit Betätigung CP ("click parent") der übergeordneten Checkbox (hier: PLC_1) wird der Remanenz-Modus verlassen und der zuletzt gespeicherte Zustand im Speicher festgeschrieben. Die Remanenz-Kennzeichnung der übergeordneten Checkbox (und ggf. der untergeordneten Checkboxen) wird ausgeschaltet oder durch eine andere Kennzeichnung (nicht dargestellt) ersetzt, die darauf hinweist, dass im Hintergrund eine wiederherstellbare Belegungsinformation gespeichert ist. Besonders vorteilhaft können diejenigen Checkboxen, die in der Remanenz als aktiviert gespeichert sind, hervorgehoben werden. Durch Betätigen der übergeordneten Checkbox PLC_1 werden nacheinander die Zustände VMA (Variable Mode all checked") und VMN ("Variable Mode no checked") in einer gemäß Konvention festgelegten Reihenfolge angesteuert; im Zustand VMA sind entsprechend alle und im Modus VMN sind keine Checkboxen markiert bzw. ausgewählt. Der "Variable"-Modus entspricht somit dem aus dem Stand der Technik bekannten Verhalten. Innerhalb des "Variable"-Modus kann durch Betätigen CC ("check child") der untergeordneten Checkboxen ein Zustand VMM ("Variable Mode mix") erreicht werden, der auch wieder (nicht dargestellt) durch einzelne Auswahl aller oder keiner der untergeordneten Checkboxen wieder in einen der Zustände VMN, VMA überführt werden kann.

Durch wiederholtes Betätigen CP ("check parent") der übergeordneten Checkbox PLC_1 kann wieder der "Remanenz"-Modus angesteuert werden - siehe linke Seite der Figur 4. Wesentlich ist, dass dabei derjenige Zustand wiederhergestellt wird, der beim Verlassen des "Remanenz"-Modus vorlag. Dies wird durch Abruf und Anwendung der im Remanenz-Speicher vorliegenden Informationen erreicht. Die Remanenz-Markierung zumindest der übergeordneten Checkbox wird wieder aktiviert. Für eine Software, die das Verhalten der graphischen Benutzeroberfläche steuert, kann für jede Checkbox eine sog. "State Machine" instanziiert sein, die mit einem Zustandsspeicher (Remanenz-Speicher) ausgestattet ist. In einer Variante kann der Remanenz-Speicher beim Verlassen eines Programms getrennt vom aktuellen Markierungszustand der Checkboxen gespeichert werden, so dass bei einem erneuten Aufruf des Programms ein Zugriff auf die letzten Remanenzdaten möglich ist.

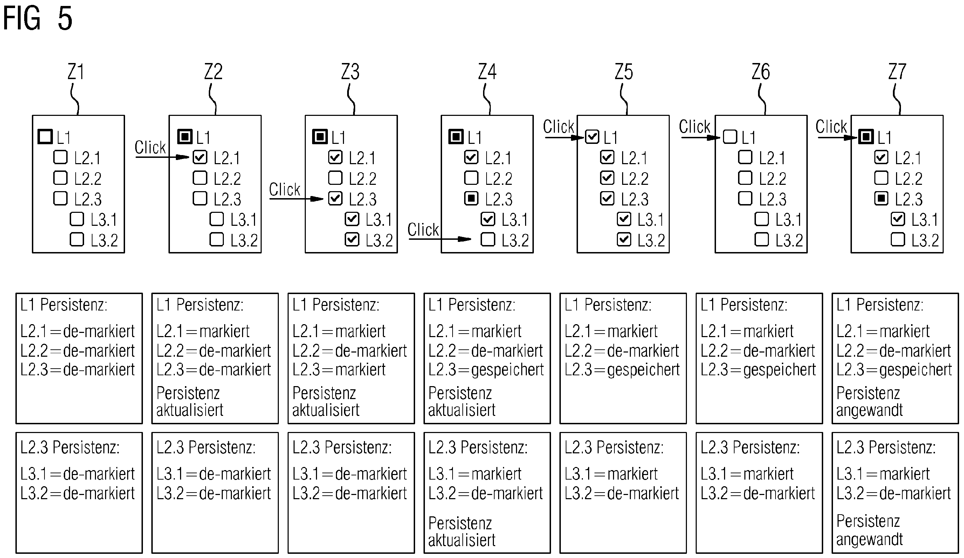

In der Figur 5 ist eine Struktur mit drei Hierarchieebenen dargestellt, mit der Checkbox "L1" in der obersten Hierarchieebene, den Checkboxen L2.1, L2.2, L2.3 in einer mittleren Hierarchieebene und schließlich in einer dritten Hierarchieebene die Checkboxen L3.1 und L3.2. In der oberen Reihe der Figur 4 sind verschiedene Zustände Z1,..., Z7 dargestellt, die sich ergeben, indem die verschiedenen Bedienaktionen, die mit dem Wort "click" beschriftet sind, an den entsprechenden Checkboxen vorgenommen werden. In den Reihen darunter sind jeweils die Speicherzustände (Persistenzen) für die verschiedenen Hierarchieebenen L1 (oberste Hierarchieebene) und für die mittlere Hierarchieebene mit den übergeordneten Checkboxen L2.1, L2.2, L2.3 dargestellt. Es wird also in der Persistenz (Speicherstruktur) einer übergeordneten Hierarchieebene jeweils der Zustand (Belegungszustand, Markierungszustand) der direkt untergeordneten Checkboxen der nächsttieferen Hierarchieebene gespeichert.

So ist beispielsweise zu sehen, dass beim Zustandsübergang von Z1 zu Z2 die Persistenz für die übergeordnete Hierarchieebene L2 aktualisiert wird, indem die Zustandsinformation für die Checkbox L2.1 auf "markiert" aktualisiert wird.

Nach dem Zustand Z4 führt eine Betätigung der Checkbox L1 dazu, dass diese samt der dieser Checkbox untergeordneten Checkboxen (in diesem Beispiel sind das alle dargestellten Checkboxen) den remanenten Zustand verlässt, wobei zunächst gemäß Konvention eines unterlagerten Betriebssystems alle Checkboxen aktiviert werden (Zustand Z5 wird erreicht), und beim nächsten "Klicken" der Zustand Z6 mit generell de-aktivierten Checkboxen erreicht wird. Ein drittes Klicken auf die "Parent-" Checkbox L1 aktiviert wieder den remanenten Zustand, was auch in dieser Figur 5 jeweils anhand der besonderen Kennzeichnung (hier: dick gezeichnete Umrandung) der entsprechenden übergeordneten Checkbox L1 visualisiert wird. Jetzt wird der letzte remanente Belegungszustand der "Child-" Checkboxen L2.2, ..., L3.2 wiederhergestellt. Beim Zustandsübergang von Z6 nach Z7 werden also die zuletzt in Schritt Z4 aktualisierten Markierungszustände wiederhergestellt ("Persistenz applied"). Dies setzt natürlich jeweils die Aktivierung des remanenten Betriebszustandes voraus. Nicht dargestellt in der Figur 5 ist, dass eine wiederholte Betätigung der Checkbox L2.3, die eine übergeordnete "Parent-" Checkbox der Checkboxen L3.1 und L3.2 ist, für diese Gruppe von Checkboxen einen separaten bzw. lokalen Remanenz-Zyklus bewirkt, der die Zustände der neben- und übergeordneten Checkboxen L1, ..., L2.2 unbeeinflusst lässt.

## Patentansprüche

1. Verfahren zur automatischen Umschaltung von Checkboxen in einer Anordnung mit Checkboxen in zumindest zwei Hierarchieebenen,
wobei bei einer Markierung einer übergeordneten Checkbox die zugehörigen untergeordneten Checkboxen zumindest der nächsten Hierarchieebene automatisch markiert werden, und wobei bei einer De-Markierung der übergeordneten Checkbox die zugehörigen untergeordneten Checkboxen zumindest der nächsten Hierarchieebene automatisch de-markiert werden, und wobei vorgesehen ist, das in Fällen, in denen nicht alle untergeordneten Checkboxen markiert oder de-markiert sind, die zugehörige übergeordnete Checkbox als teilmarkiert gekennzeichnet wird,
**dadurch gekennzeichnet,**
**dass** durch Betätigung der übergeordneten Checkbox ein remanenter Betriebszustand aktiviert bzw. de-aktiviert wird, wobei im aktivierten remanenten Betriebszustand die Markierungszustände der zu dieser übergeordneten Checkbox zugehörigen untergeordneten Checkboxen jeweils in einem Wiederherstellungsspeicher gespeichert werden,
**dass** nach einer De-Aktivierung des remanenten Betriebszustandes der Wiederherstellungsspeicher nicht verändert wird, und
**dass** bei einer erneuten Aktivierung des remanenten Betriebszustandes die Markierungszustände der zu der übergeordneten Checkbox zugehörigen untergeordneten Checkboxen anhand der im Wiederherstellungsspeicher gespeicherten Markierungszustände wiederhergestellt werden.

2. Verfahren nach Patentanspruch 1,
**dadurch gekennzeichnet,**
**dass** im remanenten Betriebszustand im Falle von mehr als zwei Hierarchieebenen die Markierungszustände der Checkboxen aller untergeordneten Hierarchieebenen bei der Bedienung einer zugehörigen übergeordneten Checkbox gespeichert bzw. wiederhergestellt werden.

3. Verfahren nach einem der vorhergehenden Patentansprüche, **dadurch gekennzeichnet,**
**dass** im remanenten Betriebszustand die gespeicherten Markierungszustände bei jeder Bedienung einer untergeordneten Checkbox zeitnah aktualisiert werden.

4. Mikroprozessorgesteuertes Gerät mit einer grafischen Benutzeroberfläche,
wobei die grafische Benutzeroberfläche Checkboxen in zumindest zwei Hierarchieebenen aufweist,
wobei das mikroprozessorgesteuerte Gerät zu einer automatischen Vorbelegung der Checkboxen eingerichtet ist,
indem bei einer Markierung einer übergeordneten Checkbox die zugehörigen untergeordneten Checkboxen zumindest der nächsten Hierarchieebene automatisch markiert werden, und indem bei einer De-Markierung der übergeordneten Checkbox die zugehörigen untergeordneten Checkboxen zumindest der nächsten Hierarchieebene automatisch de-markiert werden, und
wobei vorgesehen ist, das in Fällen, in denen nicht alle untergeordneten Checkboxen markiert oder de-markiert sind, die zugehörige übergeordnete Checkbox als teilmarkiert gekennzeichnet wird,
**dadurch gekennzeichnet,**
**dass** das Mikroprozessorgesteuerte Gerät derart ausgestaltet ist,
**dass** durch Betätigung der übergeordneten Checkbox ein remanenter Betriebszustand aktiviert bzw. de-aktiviert wird, wobei im aktivierten remanenten Betriebszustand die Markierungszustände der zu dieser übergeordneten Checkbox zugehörigen untergeordneten Checkboxen jeweils in einem Wiederherstellungsspeicher gespeichert werden,
**dass** nach einer De-Aktivierung des remanenten Betriebszustandes der Wiederherstellungsspeicher nicht verändert wird, und
**dass** bei einer erneuten Aktivierung des remanenten Betriebszustandes die Markierungszustände der zu der übergeordneten Checkbox zugehörigen untergeordneten Checkboxen anhand der im Wiederherstellungsspeicher gespeicherten Markierungszustände wiederhergestellt werden.

5. Mikroprozessorgesteuertes Gerät nach Patentanspruch 4,
**dadurch gekennzeichnet,**
**dass** das mikroprozessorgesteuerte Gerät dazu eingerichtet ist,
**dass** im remanenten Betriebszustand im Falle von mehr als zwei Hierarchieebenen die Markierungszustände der Checkboxen aller untergeordneten Hierarchieebenen bei der Bedienung einer übergeordneten Checkbox gespeichert bzw. wiederhergestellt werden.

6. Mikroprozessorgesteuertes Gerät nach einem der Patentansprüche 4 oder 5,
**dadurch gekennzeichnet,**
**dass** das mikroprozessorgesteuerte Gerät dazu eingerichtet ist,
**dass** im remanenten Betriebszustand die gespeicherten Markierungszustände bei jeder Bedienung einer untergeordneten Checkbox zeitnah aktualisiert werden.
